# EUROPEAN PATENT SPECIFICATION

(11) **EP 2 219 348 B1**
(45) Date of publication and mention of the grant of the patent: **16.03.2011**
(21) Application number: 09180597.8
(22) Date of filing: 23.12.2009
(51) Int. Cl.: H04M 1/02, G02F 1/1335, G02B 5/08

(54) **Shell for display screen and fabricating method thereof, and electronic device having the same**
Aussenschale für Anzeigeschirm, Herstellung derselben und Elektrogerät, das dieselbe aufweist
Enveloppe extérieure pour un écran d'affichage, procédé de fabrication de ladite enveloppe, et dispositif électronique la comportant

(30) Priority: 26.12.2008 CN 200810187604; 26.12.2008 CN 200810187605
(43) Date of publication of application: 18.08.2010
(73) Proprietor: BYD Company Limited, Shenzhen 518118 (CN)
(72) Inventor: Jiang, Hengliang, 518118, Shenzhen (CN); Huang, Xuan, 518118, Shenzhen (CN); Hu, Dan, 518118, Shenzhen (CN); Yang, Jianming, 518118, Shenzhen (CN); Fang, Min, 518118, Shenzhen (CN); Chen, Tao, 518118, Shenzhen (CN); Deng, Wen, 518118, Shenzhen (CN); Gao, Miao, 518118, Shenzhen (CN); Xiao, Yongfen, 518118, Shenzhen (CN); Liu, Bing, 518118, Shenzhen (CN)
(74) Representative: Gulde Hengelhaupt Ziebig & Schneider

(56) References cited:
- WO-A1-2006/112707
- WO-A1-2010/025690
- JP-A- 2000 196 718
- JP-A- 2002 229 007

## Description

### CROSS REFERENCES TO RELATED APPLICATIONS

The present application claims two priorities to two Chinese patent applications No. 200810187605.0, filed on December 26, 2008, and No. 200810187604.6, filed on December 26, 2008.

### FIELD OF THE INVENTION

The present invention generally relates to a shell for a display screen and a preparing method thereof, and an electronic device having the same.

### BACKGROUND

For actual electronic devices such as mobile phone, MP3 and so on, the position of the display screen is clearly recognizable even though there is no signal on the display. In order to improve the appearance of the device, it would be desirable to have a display screen that is hidden when there is no backing light and appears only when there is backing light. According to the state of the art, this effect has not been realized yet.

JP2002229007 discloses a shell for a display screen (e.g. of a mobile phone) arranged to hide/mirror the display screen when switched off and rendering the display screen visible only when switched on. The shell of JP2002229007 consists of a resin film substrate having a 10-30 nm thick aluminum layer coated thereon which acts as a mirror when the display is switched off, but which is translucent for light emitted by the display in its on state. JP2000196718 discloses a cover sheet for a display screen (e.g. for mobile phone) arranged to mirror the display screen when switched off and rendering it visible only when switched on. The sheet of JP2000196718 consists of a substrate having a fully reflecting mirror framing a semi-reflective mirror arranged on its rear surface facing the display screen, and the size of the semi-transparent window formed by the semi-reflective mirror corresponds to the size of the display screen. The semi-transparent coating of JP2000196718 also includes a thin metal layer. WO2006/112707 discloses a foil to be adhered to a display screen (e.g. of a mobile phone) in order to mirror the display screen when switched off and rendering the display screen visible only when switched on. Structural details of said foil (except for its adhesiveness) are not further specified in WO2006/112707. WO2010/025690 filed on 07.09.2009 and claiming the priority date of 08.09.2008 discloses a shell for a display, the shell including a semitransparent layer formed of a primer layer, a metal layer, a middle layer and a top layer in that order from interior to exterior. However, the transmittance of the semitransparent layer is not specified in W02010/025690, and an opaque coating on the opposite surface of the base substrate is also not disclosed.

### SUMMARY OF THE INVENTION

In view thereof, the present invention is directed to solve at least one of the problems existing in the prior art. Accordingly, a shell for a display screen is needed to achieve some special effects. Furthermore, a fabricating method thereof and an electronic device comprising the same are also needed for special purpose.

In one aspect, a shell for a display screen is provided, comprising a substrate; a semi transparent coating on one surface of the substrate; and an opaque coating, partially coating another surface of the substrate.

Said semi transparent coating comprises a primer layer, a metal layer, a middle layer and a top layer in order from interior to exterior, and the transmittance of said semi transparent coating is about no more than 12% in the visible wavelength range of light.

In another aspect, a fabricating method of a display screen is provided, comprising coating a semi transparent coating on one surface of a substrate, and coating an opaque coating on part of another surface of the substrate, wherein said semi transparent coating comprises a primer layer, a metal layer, a middle layer and a top layer in order from interior to exterior, and the transmittance of said semi transparent coating is no more than 12% in the visible wavelength range of light.

The fabricating method comprises a special spraying process, which can be used for spraying small surfaces of the substrate and can realize natural gradient color effects in a simple manner. The spraying process can also be realized on a three-dimensional surface.

In yet another aspect, an electronic device is provided, comprising a main body, a display screen matching the main body, and a shell matching the display screen, said shell covering the display screen, wherein said shell is provided according to the present invention, and said opaque coating covers the shell of the display screen except the area corresponding to the display screen.

According to the present invention, the display screen is hidden when there is no backing light if only the transmittance of the semi transparent coating on one surface of the substrate is no more than 12% in the visible wavelength range of light, which means that the display screen and the shell of the electronic device appear as a unified entity when there is only exterior light (such as sunshine), while the content of the display screen can be displayed clearly in order to realize the function of the display screen when there is interior light (when the display screen is turned on).

### BRIEF DESCRIPTION OF THE FIGURES

Fig.1 is a schematic diagram of the spraying process.

Fig.2 is also a schematic diagram of the spraying process.

Fig.3 is a schematic diagram of the gradient spraying line in the spraying process.

Fig.4 is a schematic diagram of a shell for a display screen provided according to the present invention.

### DETAILED DESCRIPTION OF THE INVENTION

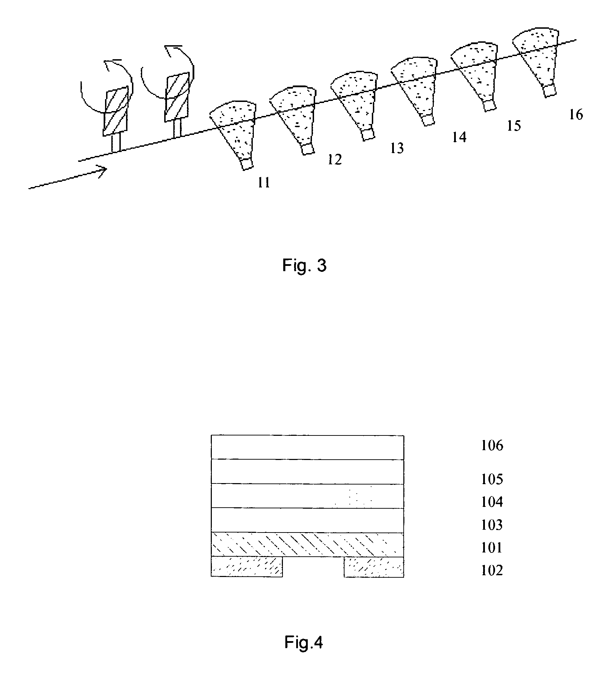

As shown in Fig.4, the shell for display screen comprises a substrate 101, a semi transparent coating on a first surface of the substrate 101, and an opaque coating 102 on an area of a second surface of the substrate 101, the second surface being opposite to the first surface. Said semi transparent coating comprises a primer layer 103, a metal layer 104, a middle layer 105 and a top layer 106, and the transmittance of the semi transparent coating is no more than 12%, preferably about 2-10%.

In order to meet the requirement for the transmittance of the semi transparent coating, the transmittance of the primer layer is about 95-100%; the transmittance of the metal layer 104 is about 5-60%; the transmittance of the middle layer 105 is about 5-85%; the transmittance of the top layer 106 is about 95-100%. The transmittance said above can be determined according to the requirements for the appearance effect of the shell.

According to the present invention, the thickness of the primer layer can be adjusted in a larger range if only the requirement for the transmittance is met, such as the thickness of the primer layer is about 5-30µm, preferably about 10-20µm. There is no special restriction about the material for forming the primer layer, and the material for forming the primer layer can be purchased, such as a UV-curing coating, which transmittance is about 95-100%, for instance Cashew VM8000 from the Tianjin Shanshui company.

The transmittance of the metal layer 104 is determined by the thickness of the metal layer 104, in order to meet the requirement for the transmittance of the metal layer 104, the thickness of the metal layer 104 is about 20-100nm, preferably about 20-60nm. The material for forming the metal layer 104 can be selected in a larger range, and the requirement for the metal layer 104 is determined according to the requirement for the metallic effect of the shell for display screen, if only the metal layer 104 has metallic texture, preferably, the material for forming the metal layer 104 can be one or more selected from the group consisting of In, Sn, Al, Ni, Cr, Cu, Ag and Ti.

The transmittance of the middle layer 105 is determined by the thickness of the middle layer 105 and the transmittance of the material for forming the middle layer 105, in order to meet the requirement for the transmittance of the middle layer 105, the thickness of the middle layer 105 can be about 5-30µm, preferably about 5-15µm. The material for forming the middle layer 105 is a mixture of clear coating and pigment, in order to meet the requirement for transmittance of the middle layer 105, the transmittance of the mixture is generally about 5-85%; and in order to obtain the mixture with said transmittance, the weight ratio of the pigment to the clear coating is generally less than 1:10. Said clear coating can be purchased, such as the clear coating Cashew VM9000 from Tianjin Shanshui Company; said pigment can also be purchased, such as the Cashew pigment from Tianjin Shanshui Company, and the color of the pigment can be selected according to the requirement of the products, such as one or more colors selected from the group consisting of red, yellow, purple, blue and black.

According to the present invention, the thickness of the top layer 106 can be adjusted in a larger range if only the requirement for the transmittance is met, for example, the thickness of the top layer 106 can be about 5-25µm, preferably about 10-20µm, in order to protect the shell for display screen. The material for forming the top layer 106 can be a UV-curing coating with a transmittance about 95-100%, for instance Cashew VM7302 from Tianjin Shanshui Company.

In order to keep an area of the substrate without opaque coating 102, said area is corresponding to the position of the visual window of the display screen, the opaque coating 102 is preferably coated on the edges around the second surface of the substrate, and the thickness of the opaque coating 102 is about 5-20µm. The width of the opaque coating 102 can be varied in a larger range, if only the opaque coating 102 won't obstruct the visual window displaying the content of the display screen. The width of the opaque coating 102 can be adjusted according to practical needs, such as the width of the opaque coating 102 is generally about 5-70% width of the substrate, and the width of the opaque coating 102 on the edges of the second surface can be the same or different. There is no special restriction about the material for forming the opaque coating 102, and the material for forming the opaque coating 102 can be a mono-component coating such as BS-002 from Meilihua Company.

According to the present invention, the material for forming the substrate can be every kind of material for forming a shell for a display screen, such as polycarbonate (PC) with a weight average molecular weight of about 12,000-18,000 or polymethyl methacrylate (PMM) with a weight average molecular weight of about 20,000-200,000. In order to meet the requirements for the transmittance of the shell for a display screen, the transmittance of the substrate can be about 85-92%.

According to the present invention, the preparing method of the shell for a display screen comprises coating a semi transparent coating on a first surface of the substrate and coating an opaque coating 102 on a second surface of the substrate. Said semi transparent coating comprises a primer layer 103, a metal layer 104, a middle layer 105 and a top layer 106 in order from interior to exterior, and the transmittance of said semi transparent coating is no more than 12%, preferably about 2-10%.

The method for forming a metal layer 104 with a transmittance of about 5-60% on the substrate can be every method for forming a metal layer 104, such as electroplating method, electroless plating method and physical vapor deposition plating method, wherein, the physical vapor deposition plating method is preferable, because the metal layer 104 coated by vacuum evaporation of physical vapor deposition plating method has uniform thickness distribution and can adhere to the substrate well, the vacuum evaporation is further preferable, and the vacuum evaporation method comprises evaporating the heated and melted metal granules to the substrate under the conditions of vacuum evaporation.

According to the preparing method provided in the present invention, preferably the amount of the metal granules should make sure that the transmittance of the metal layer 104 is about 5-60%. Generally, the amount of the metal granules is about 0.01-0.08g during vacuum evaporation when the vacuum evaporator with a diameter of about 800cm is used. The inventors of the present invention found that the metal layer 104 has a transmittance of about 15-30% when the amount of the metal granules is about 0.03-0.05g per square centimeter substrate during vacuum evaporation.

In the preparing method, the conditions of the vacuum evaporation are well known in the field, such as the vacuum pressure is about 1×10⁻³- 8×10⁻³Pa_{.}

During the vacuum evaporation process, three heating sources are generally used to heat and evaporate the metal granules, there are a resistance heating source, a electron beam heating source and a induction heating source. The induction heating source is mainly used in large-scale coating equipments and it requires complicated peripheral equipment due to the use of high-frequency. The electron beam heating source can evaporate all kinds of materials, so it is used in large-scale equipments and in experiments in thin-film fabrication. The resistive heating source is used in every field because of its advantages (simple fixing, cheap, and other advantages).

In the present invention, the metal granules for forming the metal layer 104 can be evaporated by resistive heating source or electron beam heating source.

Preferably, the metal granules for forming the metal layer 104 can be evaporated by resistive heating source, and the power of the resistive heating is about 10-40% of the total power.

Preferably, the method for heating and melting the metal granules comprises pre-heating the metal granules with a power of about 10-35% of the total power for about 10-25 seconds; pre-melting the metal granules with a power of about 25-40% of the total power for about 15-50 seconds; and heating the metal granules with a power of about 30-60% of the total power. The purpose of pre-melting is to heat the metal granules slowly to prevent the metal granules splashing during melting and evaporating, which would affect the appearance of the produces, and to prevent the non-conducting performance and the non-uniformity of the metal layer 104, which would affect the quality of the metal layer 104.

According to one preferable embodiment of the present invention, the method for evaporating the metal granules to plate the surface of the substrate in vacuum evaporator comprises the steps as follows:

1. The metal granules for forming the metal layer 104 are put in a tungsten boat, the metal granules are used as evaporation materials, both ends of the tungsten boat are connected with the anode and the cathode in the vacuum chamber of the vacuum evaporator; the substrate in an evaporation pan is put on the work piece holder of the vacuum chamber; and then vacuum is realized in the vacuum chamber.

2. The resistive heating source is powered on when the vacuum pressure is about 1×10⁻³- 8×10⁻³Pa, and the evaporation material is pre-heated with a power of about 10-35% of the total power for about 10-25 seconds, and then with a power of about 25-40% of the total power for about 15-50 seconds.

3. The evaporation material is heated with a power of about 30-60% of the total power, and the evaporation plating process starts when the metal granules are melted, and the evaporation rate is monitored by optical film monitor and the rate should be about 3 - 10 angstrom/second. The evaporated metal molecules form a coating on the surface of the substrate.

Preferably, the substrate should be treated by ion bombardment bar for 2-5 minutes before being plated so as to reduce the internal stress of the coating and to increase the compactness and adhesion of the coating. The ion bombing process can be performed in the vacuum evaporator when the vacuum pressure of the vacuum chamber is about 1×10⁻³- 8×10⁻³Pa.

The method for forming the middle layer 105 on the surface of the substrate can be every method well known in this field, for example, spraying a lacquer having one or more colors on the surface of the substrate, and then curing the lacquer to form a middle layer 105. According to the method described above, the fabrication steps comprise mixing clear coating, diluents and color paste to obtain a lacquer with a viscosity of about 7-10 seconds(Pa·s), spraying the lacquer on the surface of the substrate, leveling for 3-5 minutes, and curing to form a middle layer 105, wherein, in order to meet the requirement for the transmittance of the middle layer 105, the amount of the color paste is generally about less than 10% of the total weight of the clear coating so as to keep the transmittance of the lacquer about 5-85%. In fact, in order to obtain a lacquer with a transmittance about 5-85%, one of ordinary skill in the art can use a spectrophotometer to measure the transmittance of the lacquer so as to control the amount of the color paste according to the color of the color paste.

In order to meet individualized requirements, a multi-color spraying method is preferably used to achieve a natural gradient effect on the surface of the substrate. According to the present invention, the method for forming the middle layer 105 comprises spraying lacquer on the surface of the substrate, wherein said surface of the substrate comprises at least one group of areas to be sprayed, each group comprising at least a first area to be sprayed, a second area to be sprayed and a third area to be sprayed. The second area to be sprayed adjoins the first area to be sprayed and the third area to be sprayed , and the method for spraying lacquers on the substrate comprises at least a first spraying and a second spraying, said first spraying comprising spraying a lacquer with a first color on the first area to be sprayed and the second area to be sprayed, said second spraying comprising spraying a lacquer with a second color on the third area to be sprayed and the second area to be sprayed, and the first spraying and the second spraying are not performed at the same time. The transmittance of the lacquer is about 5-85%, preferably the transmittance of the lacquer is about 20-75%.

In the present invention, the transmittance of the lacquer can be measured by every conventional method, for instance using a spectrophotometer.

Preferably, the first spraying and the second spraying are performed alternately so as to reach a better spraying effect.

According to the present invention, the color of the second area to be sprayed is an intermediate color between the color of the first area to be sprayed and the color of the third area to be sprayed, the intermediate color formed on the second area to be sprayed is a gradient color which makes the appearance of the product more natural, different gradient effects can be realized by adjusting the size of the first area and the second area and the third area, the second area to be sprayed is the gradient area, so, the color transits slowly when the gradient area is wide; and the color transits rapidly when the gradient area is narrow. According to the present invention, the size of every area can be selected according to the requirements of the production.

The first color to be sprayed on the first area and the second area and the second color to be sprayed on the third area and the second area can be every kind of color, preferably they can be one or more colors selected from the group consisting of red, yellow, purple, blue and black, and the first color is different from the second color.

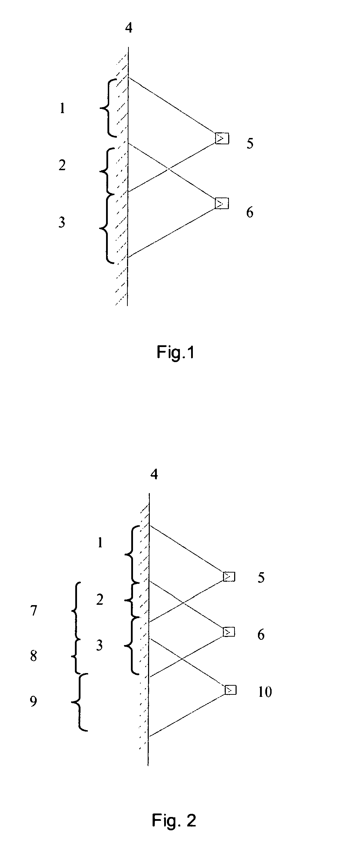

According to one embodiment of the present invention, as shown in Fig.1, the substrate 4 comprises a group of areas to be sprayed: a first area 1 to be sprayed, a second area 2 to be sprayed and a third area 3 to be sprayed; in a first spray process 5, a paint with a first color is sprayed on the first area 1 and the second area 2, in a second spray process 6, a paint with a second color is sprayed on the third area 3 and the second area 2, and, the paint used in process 5 and the paint used in process 6 have different colors.

According to another embodiment of the present invention, as shown in Fig.2, the substrate 4 comprises two groups of areas to be sprayed, the first group comprises a first area 1 to be sprayed, a second area 2 to be sprayed and a third area 3 to be sprayed; the second group comprises a first area 7 to be sprayed, a second area 8 to be sprayed and a third area 9 to be sprayed.

In a first spray process 5, a paint with a first color is sprayed on the first area 1 and the second area 2, in a second spray process 6, a paint with a second color is sprayed on the third area 3 and the second area 2 (also the first area 7 and the second area 8 of the second group), in a third spray process 10, a paint with yet another color is sprayed on the second area 8 and the third area 9 of the second group. The paint used in the first process 5 and the paint used in the second process 6 have different colors, and the paint used in the second process 6 and the paint used in the third process 10 have different colors.

The equipment for spraying can be a conventional spraying equipment, such as a spray gun. The thickness of the coating sprayed by spray gun can be a conventional coating thickness. Generally, a paint is sprayed from the spray gun with a conical shape, so the amount of paint in the central area of the cone will be slightly more than the amount of paint in the peripheral area of the cone. However, since the first spraying and the second spraying are performed alternately in the present invention and the second area to be sprayed is an overlapping area to be sprayed both in the first and in the second spraying process, it follows that the thickness of the paint in the second area is nearly the same as in the first area and the third area, and the coating has a rather uniform thickness.

The spraying method can be used for spraying the substrate made by plastic such as polycarbonate (PC1414) or acrylonitrile - butadiene - styrene (ABS) or polymethyl methacrylate (PMMA), or metal such as stainless steel.

According to the present invention, the distance between adjacent spray equipments, the spray location and the spray rate of the spray equipment can be adjusted to form a gradient area in the overlapping area to realize excellent gradient effect on the surface of the substrate.

Generally, the spray equipment and the substrate are placed horizontally, and the distance between them is about 30-100cm. The distance between adjacent spray equipments is about 20-50cm and the spray angle of the spray equipments is about 10-80°. As known in this field, the paint sprayed by the spray equipment has a conical shape formed according to the fix-point which is the discharge point of the spray equipment, the side face of the sprayed paint appears a shape of sector, and said spray angle is the included angle between any two generatrixs of said conical shape.

Preferably, multi-color spray is used to make the shell for display screen more colorful.

According to the present invention, the substrate can be sprayed by alternately spraying method or continuous spraying method.

As shown in Fig.3, a plurality of substrates move along one direction on the production line, then the substrates can pass by a plurality of spray guns, and the number of the spray guns is not limited and determined according to the requirement. The positions and the spray rates of the spray guns are adjusted according to the requirements, the paint in spray gun 11, spray gun 13 and spray gun 15 has the same color, and the paint in spray gun 12, spray gun 14 and spray gun 16 has the same color, and the two colors are different; when the first substrate moves to the position corresponding to the spray gun 11, the spray gun 11 will start to spray a paint to corresponding areas to be sprayed, then the first substrate moves to the position corresponding to the spray gun 12, and the spray gun 12 will start to spray another paint to corresponding areas to be sprayed. Meanwhile, the second substrate moves to the position corresponding to the spray gun 11, and the spray gun 11 starts to spray a paint to corresponding areas of the second substrate to be sprayed, when the first substrate moves to the position corresponding to the spray gun 13, the spray gun 13 continues to spray a paint to corresponding areas to be sprayed. After spraying according to the above rules, in the overlapping areas of the substrates a gradient color effect appears.

According to the present invention, the method for forming the primer layer 103, the top layer 106 and the lacquer coating can be every conventional method, such as spraying.

For example, the method for forming the primer layer 103 may comprise mixing clear coating and diluents to obtain a lacquer with a viscosity of about 7-9 seconds(Pa·s), spraying the lacquer on the surface of the substrate, leveling for 3-5 minutes, and then curing to form the primer layer 103.

The method for forming the top layer 106 preferably comprises mixing clear coating and diluents to obtain a lacquer with a viscosity of about 7-9 seconds(Pa·s), spraying the lacquer on the surface of the substrate, leveling for 3-5 minutes, and then curing to form the top layer 106.

The method for forming the opaque coating 102 on the surface of the substrate preferably comprises sticking a protective film on parts of the surface where the light can pass through, mixing opaque paint and diluents to obtain an opaque lacquer with a viscosity of about 9-12 seconds(Pa·s), spraying the lacquer on the surface of the substrate, leveling for 3-5 minutes, and then curing to form the opaque coating 102. After the protective film is ripped off, a translucent area corresponding to the position and shape of the visual window is formed.

The conditions for spraying are conventional conditions comprising spray temperature and spray humidity; for example, the spray temperature can be about 18-25°C, and the relative spray humidity can be about 40-70%.

Said diluents can be every kind of conventional diluents, such as the product Cashew 9002 from Tianjin Shanshui Company and the product BS-02 from Meilihua Company.

The viscosity can be measured using Yantian viscosity cup, and the test method is well known in this field.

Said curing method can be every conventional method, thermosetting and light curing can be selected according to the coating. The curing conditions can be conventional conditions, for example, the conditions for thermosetting comprise that the curing temperature can be about 50-80°C and the curing time can be about 5-10 minutes; and the conditions for light curing comprise that the drying temperature can be about 40-100°C and the drying time can be about 10-15 minutes, the UV irradiation time can be about 20-25 seconds, the UV curing energy can be about 1,200-1,600 mJ/cm², and the UV intensity can be about 400-800 mW/cm² to obtain excellent cured coating. The lacquer for forming the primer layer 103 and the top layer 106 is generally UV lacquer, so UV-curing method is mostly adopted. The lacquer for forming the middle layer 105 and the opaque coating 102 is thermosetting lacquer generally, so thermal curing method is used mostly, and the categories of the curing agent is well known in the prior art, for instance the curing agent Cashew KM-2 from Tianjin Shanshui Company.

According to the present invention, the method further comprises cleaning the substrate before spraying in order to remove the dirt on the surface of the substrate. The cleaning method can be every kind of general cleaning method, such as soaking or drip washing with white gas or alcohol.

An electronic device is provided in the present invention, comprising a main body, a display screen matching the body, and a shell matching the display screen, said shell covering the display screen, wherein said shell is provided according to the present invention, and said opaque coating 102 adheres on the shell of the display screen except the area corresponding to the display screen.

The main body of the electronic device may comprise various function elements. The various elements and their combination and connection are well known to those skilled in this field.

The electronic device of the present invention may be any device, such as a mobile phone, an MP3, a PDA and a digital camera etc. In some embodiment, the electronic device is a mobile phone.

The present invention will be described in detail with the following embodiment.

Embodiment 1

A method for preparing the shell for display screen according to the present invention is illustrated in this embodiment.

1. Forming a semi transparent coating on one surface of the substrate

1) The primer layer

The primer oil for the primer layer 103 (Cashew VM8000 with a transmittance of about 99%) and the diluents (Cashew 9002) are mixed according to a weight ratio of about 1.5:1 to form a paint with a viscosity of about 8 seconds(Pa·s), the mixture is sprayed on one surface of the substrate, wherein, the material of the substrate is polycarbonate (PC1414), the thickness of the substrate is about 2 millimeters, and the transmittance of the substrate is about 90%. The coated substrate is baked under about 65 for about 8 minutes, and then the coated substrate is irradiated with ultraviolet radiation for about 25 seconds, wherein, the energy of the ultraviolet radiation is about 1,500 mJ/cm², and the intensity of the ultraviolet radiation is about 450 mW/cm². Then, a primer layer 103 with a thickness of about 16µm and a transmittance of about 99% is obtained on one surface of the substrate.

2) The metal layer

The metal layer 104 is plated using vacuum evaporation by vacuum evaporation machine (TPM-1618-36V-1, Taibei Vacuum).

Sn granules used as evaporation material are put into a tungsten boat, both ends of the tungsten boat are connected with the anode and the cathode in the vacuum chamber of the vacuum evaporator; the substrate in an evaporation pan is put on the work piece holder of the vacuum chamber; and then air is pumped out of the vacuum chamber.

When the vacuum pressure reaches 2×10⁻³Pa, the resistive heating resource is powered on, and the power of the resistive heating resource is adjusted to 34% of the total power for 25 seconds for pre-heating; then the power of the resistive heating resource is adjusted to 40% of the total power for 45 seconds for pre-melting.

Once more, the power of the resistive heating resource is adjusted to 46% of the total power for heating, the evaporation plating process starts when the metal granules in the tungsten boat are totally melted, the evaporation rate is kept on about 10 angstrom/second and monitored by an optical film monitor, the plating time is about 25 seconds, the evaporated Sn granules are plated on the surface of the substrate to form a metal layer with a thickness of about 20nm and a transmittance of about 30%.

The middle layer

The primer oil for the middle layer 105 (Cashew VM9000 with a transmittance of about 99%), the diluents (Cashew 9002) and the curing agent (Cashew KM-2) are mixed according to a weight ratio of about 1:2:0.1 to form a mixture with a viscosity of about 8.2 seconds(Pa·s).

A red paste with a weight of about 3% of the weight of the primer oil and a black paste with a weight of about 2% of the weight of the primer oil are added into the mixture above respectively. After mixing sufficiently, a red paint and a black paint with a transmittance of about 25% are obtained respectively, wherein the transmittance is measured by a spectrophotometer.

The obtained paints are added into oil cans; the positions and the spray rates of the spray guns are adjusted according to the conditions that the horizontal distance between the spray gun and the substrate is about 60cm, the horizontal distance between adjacent spray guns is about 30cm and the spray angle is about 60°; the red paint is sprayed first in corresponding areas by a spray gun, then the black paint is sprayed in corresponding areas, and the red paint and the black paint are sprayed alternately.

After spraying, the substrate is baked under about 80°C for about 20 minutes to form a middle layer 105 with a thickness of about 15µm and a transmittance of about 24.7%.

The top layer

The primer oil for the top layer 106 (Cashew 7302 with a transmittance of about 99%) and diluents (Cashew 9002) are mixed according to a weight ratio of about 10:8 to form a mixture, the mixture is sprayed on the middle layer 105 of the substrate, then the substrate is baked under about 65°C for about 8 minutes and irradiated with ultraviolet radiation for about 25 seconds for curing, the energy of the ultraviolet radiation is about 1,600mJ/cm², the intensity of the ultraviolet radiation is about 450mW/cm², the thickness of the obtained top layer 106 is about 16µm and the transmittance is about 99%.

A semi transparent coating is obtained after the steps said above, and the transmittance of the semi transparent coating is about 7.2% according to the formula: 99% (substrate) × 99% (the primer layer 103) × 30% (the metal layer 104) × 24.7% (the middle layer 105) ×99% (the top layer 106).

2. Forming an opaque coating 102 on another surface of the substrate

A protective film is stuck on the area corresponding to the visual window (display screen), the primer oil for the opaque coating 102 (Meilihua BS-002) and the diluents (Meilihua BS-02) are mixed according to a weight ratio of about 2:1 to form a paint with a viscosity of about 9 seconds(Pa·s), the paint is sprayed on the other surface of the substrate with a width of about 8mm, then the substrate is baked under 65°C for 10 minutes to obtain an opaque coating 102 with a thickness of about 10µm, finally, the protective film is removed.

Embodiment 2

A multi-color spray method according to the present invention is illustrated in this embodiment.

(1) Pieces of polycarbonate (PC1414) sheet are used as substrates.

(2) Primer oil (Cashew VM9000) with a transmittance of about 99%, diluents (Cashew 9002) and curing agent (Cashew KM-2) are mixed according to a weight ratio of about 1:2:0.1 to form a colorless paint with a viscosity of about 8.2 seconds (Pa·s), a red paste with a weight of about 3% of the weight of the primer oil and a black paste with a weight of about 2% of the weight of the primer oil are added into the colorless paint said above respectively; after mixing sufficiently, a red paint and a black paint with a transmittance of about 75% are obtained respectively, wherein the transmittance is measured by spectrophotometer.

(3) The paints obtained in step (2) are added into oil cans respectively, wherein, the red paint is added into the oil can corresponding to the first spray gun, the third spray gun and the fifth spray gun, the black paint is added into the oil can corresponding to the second spray gun, the fourth spray gun and the sixth spray gun; the positions and the spray rates of the spray guns are adjusted according to the conditions that the horizontal distance between the spray gun and the substrate is about 60cm, the horizontal distance between adjacent spray guns is about 30cm and the spray angle is about 60°.

Numbers of substrates are fixed on the production line according to a certain order. Every substrate comprises a first area to be sprayed, a second area to be sprayed and a third area to be sprayed, and the second area is adjacent to the first area and the third area; when the first substrate moves to the position corresponding to the first spray gun, the red paint is sprayed to the corresponding areas (the first area to be sprayed and the second area to be sprayed), then the first substrate moves to the position corresponding to the second spray gun, and the black paint is sprayed to the corresponding areas (the second area to be sprayed and the third area to be sprayed), meanwhile, the second substrate moves to the position corresponding to the first spray gun, the red paint is sprayed to the corresponding areas of the second substrate (the first area to be sprayed and the second area to be sprayed); when the first substrate moves to the position corresponding to the third spray gun, the red paint is sprayed to the corresponding areas of the first substrate continuously (the first area to be sprayed and the second area to be sprayed), at this moment, the second substrate moves to the position corresponding to the second gun, and the black paint is sprayed to the corresponding areas of the second substrate (the second area to be sprayed and the third area to be sprayed), in accordance with this rule, the red paint and the black paint can be sprayed on the substrates alternately.

After the spraying process, the substrates are baked under 80°C for 20 minutes to form a coating with a thickness of about 10µm.

The spraying method is easy to process and can realize a uniform and steady gradient effect. Furthermore, the gradient effect is adjustable, so the method can be used in large-scale production.

## Claims

1. A shell for a display screen, comprising:
a substrate (101);
a semi transparent coating on a first surface of the substrate (101); **characterised in that** the shell further comprises
an opaque coating (102) on a second surface of the substrate (101), the second surface being opposite to the first surface,
wherein the semi transparent coating comprises a primer layer (103), a metal layer (104), a middle layer (105) and a top layer (106) in order from interior to exterior, and the semi transparent coating has a transmittance of no more than 12% in the visible wavelength range of light.

2. The shell for a display screen of claim 1, wherein the material of the substrate (101) can be plastic or metal.

3. The shell for display screen according to one of the preceding claims, wherein the semi transparent coating has a transmittance of 2-10% in the visible wavelength range of light.

4. The shell for a display screen according to one of the preceding claims, wherein, the primer layer (103) has a transmittance of 95-100% in the visible wavelength range of light, the metal layer (104) has a transmittance of 5-60% in the visible wavelength range of light, the middle layer (105) has a transmittance of 5-85% in the visible wavelength range of light, and the top layer (106) has a transmittance of 95-100% in the visible wavelength range of light.

5. The shell for a display screen according to one of the preceding claims, wherein the primer layer (103) has a thickness of 5-30µm, the metal layer (104) has a thickness of 20-100nm, the middle layer (105) has a thickness of 5-30µ m, and the top layer (106) has a thickness of 5-25µm.

6. The shell for a display screen according to one of the preceding claims, wherein the opaque coating (102) is located on a peripheral area of the second surface of the substrate (101), and the opaque coating (102) has a thickness of 5-20µm.

7. The shell for a display screen according to one of the preceding claims, wherein the material of the metal layer (104) can be one or more metals selected from the group consisting of In, Sn, Al, Ni, Cr, Cu, Ag and Ti; the color of the middle layer (105) can be one or more colors selected from the group consisting of red, yellow, purple, blue and black; the material of the substrate (101) is polycarbonate or polymethyl methacrylate, and/or the substrate (101) has a transmittance of 85-92% in the visible wavelength range of light.

8. A fabricating method of the shell for a display screen according to one of claims 1 through 7, comprising:
forming a semi transparent coating on a first surface of the substrate (101); and
forming an opaque coating (102) on a second surface of the substrate (101), the second surface being opposite to the first surface,
wherein the semi transparent coating comprises a primer layer (103), a metal layer (104), a middle layer (105) and a top layer (106) in order from interior to exterior, and the semi transparent coating has a transmittance of no more than 12% in the visible wavelength range of light.

9. The fabricating method of claim 8, wherein the middle layer (105) is formed by spraying a paint on the surface of the substrate (101); wherein the surface of the substrate comprises at least one group of areas to be sprayed; wherein each group of areas to be sprayed comprises at least a first area to be sprayed (1, 7), a second area (2, 8) to be sprayed and a third area (3, 9) to be sprayed, the second area (2, 8) being adjacent to the first area (1, 7) and the third area (3, 9);
wherein the methods for spraying the paints comprise at least a first spraying process and a second spraying process, the first spraying process comprising spraying a first paint on the first area (1, 7) and the second area (2, 8), and the second spraying process comprising spraying a second paint on the third area (3, 9) and the second area (2, 8), the second paint being a different color from the first paint, wherein the first spraying process and the second spraying process are performed at different times, and wherein the paint has a transmittance of 5-85% in the visible wavelength range of light.

10. The fabricating method of claim 9, wherein the first spraying process and the second spraying process are performed alternately, and the second spraying process is performed after the first spraying process.

11. The fabricating method according to one of claims 9-10, wherein the color of the paint sprayed on the first area (1, 7) and the second area (2, 8) and the color of the paint sprayed on the third area (3, 9) and the second area (2, 8) are one or more colors selected independently from the group consisting of red, yellow, purple, blue and black, and the color of the paint sprayed on the first area (1, 7) and the second area (2, 8) is different from the color of the paint sprayed on the third area (3, 9) and the second area (2, 8).

12. The fabricating method according to one of claims 8-11, wherein the metal layer (104) is formed by vacuum evaporation method, wherein the vacuum evaporation method comprises depositing the melted metal granules on the surface of the substrate (101) under vacuum evaporation conditions, and wherein the metal layer (104) formed under the vacuum evaporation conditions has a transmittance of 5-60% in the visible wavelength range of light.

13. An electronic device, comprising a main body, a display screen matching the main body and a shell matching the display screen, the shell for the display screen according to one of claims 1-7, wherein the shell covers the display screen, and the opaque coating (102) covers an area of the shell except the area corresponding to the display screen.

## Patentansprüche

1. Aussenschale für einen Anzeigeschirm mit :
einem Substrat (101) ;
einem halbtransparenten Überzug auf einer ersten Oberfläche des Substrates (101), **dadurch gekennzeichnet, dass** die Aussenschale weiterhin einen opaken Überzug auf einer zweiten Oberfläche des Substrates (101) aufweist, wobei die zweite Oberfläche gegenüber der ersten Oberfläche angeordnet ist, und
wobei der halbtransparente Überzug in der Reihenfolge von innen nach außen eine Grundschicht (103), eine Metallschicht (104), eine Mittelschicht (105) und eine Deckschicht (106) aufweist, und der halbtransparente Überzug im sichtbaren Wellenlängenbereich des Lichts einen Transmissionsgrad von nicht mehr als 12 % besitzt.

2. Aussenschale für einen Anzeigeschirm nach Anspruch 1, wobei das Material des Substrates (101) Kunststoff oder Metall sein kann.

3. Aussenschale für einen Anzeigeschirm nach einem der vorhergehenden Ansprüche, wobei der halbtransparente Überzug in dem sichtbaren Wellenlängenbereich des Lichts einen Transmissionsgrad von 2 bis 10 % besitzt.

4. Aussenschale für einen Anzeigeschirm nach einem der vorhergehenden Ansprüche, wobei die Grundschicht (103) in dem sichtbaren Wellenlängenbereich des Lichts einen Transmissionsgrad von 95 bis 100 %, die Metallschicht (104) in dem sichtbaren Wellenlängenbereich des Lichts einen Transmissionsgrad von 5 bis 60 %, die Mittelschicht (105) in dem sichtbaren Wellenlängenbereich des Lichts einen Transmissionsgrad von 5 bis 85 % und die Deckschicht (106) in dem sichtbaren Wellenlängenbereich des Lichts einen Transmissionsgrad von 95 bis 100 % aufweist.

5. Aussenschale für einen Anzeigeschirm nach einem der vorhergehenden Ansprüche, wobei die Grundschicht (103) eine Stärke von 5 bis 30 µm, die Metallschicht (104) eine Stärke von 20 bis 100 nm, die Mittelschicht (105) eine Stärke von 5 bis 30 µm und die Deckschicht (106) eine Stärke von 5 bis 25 µm besitzt.

6. Aussenschale für einen Anzeigeschirm nach einem der vorhergehenden Ansprüche, wobei sich der opake Überzug (102) an einem Umfangsbereich der zweiten Oberfläche des Substrates (101) befindet, und der opake Überzug (102) eine Stärke von 5 bis 20 µm aufweist.

7. Aussenschale für einen Anzeigeschirm nach einem der vorhergehenden Ansprüche, wobei es sich bei dem Material der Metallschicht (104) um eines der Metalle oder mehrere der Metalle aus der Gruppe bestehend aus In, Sn, Al, Ni, Cr, Cu, Ag und Ti handelt ; die Farbe der Mittelschicht (105) kann eine Farbe oder können mehrere Farben aus der Gruppe bestehend aus rot, gelb, purpurfarben, blau und schwarz sein ; bei dem Material des Substrates (101) handelt es sich um Polycarbonat oder Polymethylmethacrylat (PMMA) und / oder das Substrat (101) besitzt im sichtbaren Wellenlängenbereich des Lichts einen Transmissionsgrad von 85 bis 92 %.

8. Herstellungsverfahren für die Aussenschale eines Anzeigeschirmes nach einem der Ansprüche 1 bis 7, das aus folgendem besteht :
Herstellen eines halbtransparenten Überzugs auf einer ersten Oberfläche des Substrates (101) und
Herstellen eines opaken Überzugs (102) auf einer zweiten Oberfläche des Substrates (101), wobei sich die zweite Oberfläche gegenüber der ersten Oberfläche befindet,
wobei der halbtransparente Überzug in der Reihenfolge von innen nach außen eine Grundschicht (103), eine Metallschicht (104), eine Mittelschicht (105) und eine Deckschicht (106) aufweist, und der halbtransparente Überzug im sichtbaren Wellenlängenbereich des Lichts einen Transmissionsgrad von nicht mehr als 12 % besitzt.

9. Herstellungsverfahren nach Anspruch 8, wobei die Mittelschicht (105) durch Aufsprühen eines Farbanstrichs auf die Oberfläche des Substrates (101) hergestellt wird ; wobei die Oberfläche des Substrates mindestens eine Gruppe von zu besprühenden Bereichen aufweist ; wobei jede Gruppe von zu besprühenden Bereichen mindestens einen ersten zu besprühenden Bereich (1, 7), einen zweiten zu besprühenden Bereich (2, 8) und einen dritten zu besprühenden Bereich (3, 9) umfasst, wobei der zweite Bereich (2, 8) an den ersten Bereich (1, 7) und an den dritten Bereich (2, 9) angrenzt ;
wobei die Verfahren zum Aufsprühen der Farbanstriche mindestens ein erstes Sprühverfahren und ein zweites Sprühverfahren umfassen, wobei das erste Sprühverfahren darin besteht, einen ersten Farbanstrich auf den ersten Bereich (1, 7) und auf den zweiten Bereich (2, 8) aufzusprühen und das zweite Sprühverfahren darin besteht, einen zweiten Farbanstrich auf den dritten Bereich (3, 9) und auf den zweiten Bereich (2, 8) aufzusprühen, wobei der zweite Farbanstrich eine andere Farbe aufweist als der erste Farbanstrich, wobei das erste Sprühverfahren und das zweite Sprühverfahren zu unterschiedlichen Zeiten durchgeführt werden und wobei der Farbanstrich im sichtbaren Wellenlängenbereich des Lichts einen Transmissionsgrad von 5 bis 85 % aufweist.

10. Herstellungsverfahren nach Anspruch 9, wobei das erste Sprühverfahren und das zweite Sprühverfahren abwechselnd durchgeführt werden, und das zweite Sprühverfahren nach dem ersten Sprühverfahren durchgeführt wird.

11. Herstellungsverfahren nach einem der Ansprüche 9 bis 10, wobei es sich bei der Farbe des Farbanstrichs, der auf den ersten Bereich (1,7) und den zweiten Bereich (2, 8) aufgesprüht wird, und bei der Farbe des Farbanstrichs, der auf den dritten Bereich (3, 9) und den zweiten Bereich (2, 8) aufgesprüht wird, um eine Farbe oder mehrere Farben handelt, die unabhängig aus der Gruppe bestehend aus rot, gelb, purpurfarben, blau und schwarz ausgewählt wurden, und die Farbe des Farbanstrichs, der auf den ersten Bereich (1, 7) und auf den zweiten Bereich (2, 8) aufgesprüht wurden, sich von der Farbe des Farbanstrichs unterscheidet, der auf den dritten Bereich (3, 9) und auf den zweiten Bereich (2, 8) aufgesprüht wurde.

12. Herstellungsverfahren nach einem der Ansprüche 8 bis 11, wobei die Metallschicht (104) durch Aufdampfen im Hochvakuum hergestellt wird, wobei das Aufdampfen im Hochvakuum darin besteht, dass die geschmolzenen Metallkörnchen durch Aufdampfen im Hochvakuum auf die Oberfläche des Substrates (101) aufgetragen werden, und wobei die durch Aufdampfen im Hochvakuum hergestellte Metallschicht (104) im sichtbaren Wellenlängenbereich des Lichts einen Transmissionsgrad von 5 bis 60 % besitzt.

13. Elektronisches Gerät mit einem Hauptteil, einem Anzeigeschirm, der zu dem Hauptteil passt und einer Aussenschale, die zu dem Anzeigeschirm passt, wobei die Aussenschale für den Anzeigeschirm nach einem der Ansprüche 1 bis 7 ausgebildet ist, wobei die Aussenschale den Anzeigeschirm abdeckt und der opake Überzug (102) einen Bereich der Aussenschale abdeckt, ausgenommen den Bereich, der dem Anzeigeschirm entspricht.

## Revendications

1. Enveloppe extérieure pour un écran d'affichage comportant :
un substrat (101) ;
un revêtement semi-transparent sur une première surface du substrat (101) **caractérisé en ce que** l'enveloppe comporte en outre un revêtement opaque (102) sur une deuxième surface du substrat (101), la deuxième surface étant agencée vis-à-vis la première surface,
le revêtement semi-transparent dans l'ordre de l'intérieur vers l'extérieur comportant une couche de fond (103), une couche métallique (104), une couche moyenne (105) et une couche supérieure (106), et le revêtement semi-transparent ayant un facteur de transmission de 12% maxi dans la plage des longueurs d'onde de la lumière visible.

2. Enveloppe extérieure pour un écran d'affichage selon la revendication 1, le matériau du substrat (101) pouvant être de la matière plastique ou du métal.

3. Enveloppe extérieure pour un écran d'affichage selon l'une quelconque des revendications précédentes, le revêtement semi-transparent possédant un facteur de transmission de 2 à 10 % dans la plage des longueurs d'onde de la lumière visible.

4. Enveloppe extérieure pour un écran d'affichage selon l'une quelconque des revendications précédentes, la couche de fond (103) présentant un facteur de transmission de 95 à 100 % dans la plage des longueurs d'onde de la lumière visible, la couche métallique (104) présentant un facteur de transmission de 5 à 60 % dans la plage des longueurs d'onde de la lumière visible, la couche moyenne (105) présentant un facteur de transmission de 5 à 85 % dans la plage des longueurs d'onde de la lumière visible, la couche supérieure (106) présentant un facteur de transmission de 95 à 100 % dans la plage des longueurs d'onde de la lumière visible.

5. Enveloppe extérieure pour un écran d'affichage selon l'une quelconque des revendications précédentes, la couche de fond (103) présentant une épaisseur de 5 à 30 µm, la couche métallique (104) présentant une épaisseur de 20 à 100 nm, la couche moyenne (105) présentant une épaisseur de 5 à 30 µm et la couche supérieure (106) présentant une épaisseur de 5 à 25 µm.

6. Enveloppe extérieure pour un écran d'affichage selon l'une quelconque des revendications précédentes, le revêtement opaque (102) se retrouvant dans une zone périphérique de la deuxième surface du substrat (101) et le revêtement opaque (102) présentant une épaisseur de 5 à 20 µm.

7. Enveloppe extérieure pour un écran d'affichage selon l'une quelconque des revendications précédentes, le matériau de la couche métallique (104) étant l'un ou plusieurs des métaux du groupe comportant In, Sn, Al, Ni, Cr, Cu, Ag et Ti ; la couleur de la couche moyenne (105) pouvant être une couleur ou plusieurs couleurs du groupe comportant le rouge, jaune, pourpre, bleu et noir ; le matériau du substrat (101) étant un polycarbonate ou un polyméthyle méthacrylate et / ou le substrat (101) présentant un facteur de transmission de 85 à 92 % dans la plage des longueurs d'onde de la lumière visible.

8. Procédé de fabrication pour l'enveloppe extérieure d'un écran d'affichage
selon l'une quelconque des revendications 1 à 7 comportant :
formage d'un revêtement semi-transparent sur une premier surface du substrat (101)
et
formage d'un revêtement opaque (102) sur une deuxième surface du substrat (101), la deuxième surface se retrouvant vis-à-vis la première surface,
le revêtement semi-transparent dans l'ordre de l'intérieur vers l'extérieur
comportant une couche de fond (103), une couche métallique (104), une couche moyenne (105) et une couche supérieure (106), et le revêtement semi-transparent ayant un facteur de transmission de 12% maxi dans la plage des longueurs d'onde de la lumière visible.

9. Procédé de fabrication selon la revendication 8, la couche moyenne (105) étant formée par application de la peinture au pistolet à la surface du substrat (101) ; la surface du substrat comportant au moins un groupe des zones à bomber ; chaque groupe des zones à bomber comportant au moins une première zone (1, 7) à bomber, une deuxième zone (2, 8) à bomber et une troisième zone (3, 9) à bomber, la deuxième zone (2, 8) étant adjacente à la première zone (1, 7) et à la troisième zone (2, 9) ;
les procédés pour application de la peinture au pistolet comportant au moins un premier procédé et un deuxième procédé pour l'application de la peinture au pistolet, le premier procédé de l'application de la peinture au pistolet comportant l'application d'une première peinture à la première zone (1, 7) et à la deuxième zone (2, 8), et le deuxième procédé de l'application de la peinture au pistolet comportant l'application d'une deuxième peinture à la troisième zone (3, 9) et à la deuxième zone (2, 8), la deuxième peinture présentant une autre couleur que la première peinture, le premier procédé de l'application de la peinture au pistolet et le deuxième procédé de l'application de la peinture au pistolet s'effectuant à des périodes différentes, et la peinture présentant un facteur de transmission de 5 à 85 % dans la plage des longueurs d'onde de la lumière visible.

10. Procédé de fabrication selon la revendication 9, le premier procédé de l'application de la peinture au pistolet et le deuxième procédé de l'application de la peinture au pistolet étant effectué d'une manière alternante et le deuxième procédé de l'application de la peinture au pistolet étant effectué après le premier procédé de l'application de la peinture au pistolet.

11. Procédé de fabrication selon l'une des revendications 9 à 10, la couleur de la peinture bombée à la première zone (1, 7) et à la deuxième zone (2, 8), et la couleur de la peinture étant bombée à la troisième zone (3, 9) et la deuxième zone (2, 8) étant une couleur ou plusieurs couleurs choisi indépendamment du groupe comprenant le rouge, jaune, pourpre, bleu et noir, et la couleur de la peinture bombée à la première zone (1, 7) et à la deuxième zone (2, 8) étant différente de la couleur de la peinture bombée à la troisième zone (3, 9) et à la deuxième zone (2, 8).

12. Procédé de fabrication selon l'une quelconque des revendications 8 à 11, la couche métallique (104) étant formée par le procédé d'évaporation sous vide, le procédé d'évaporation sous vide comportant par le dépôt des granules métalliques fondus sur la surface du substrat (101) sous des conditions d'évaporation sous vide, et la couche métallique (104) formée sous des conditions d'évaporation sous vide présentant un facteur de transmission de 5 à 60 % dans la plage des longueurs d'onde de la lumière visible.

13. Dispositif électronique comportant un corps, un écran d'affichage s'adaptant au corps et une enveloppe extérieure s'adaptant à l'écran d'affichage, l'enveloppe extérieure pour l'écran d'affichage étant formée selon l'une quelconque des revendications 1 à 7, l'enveloppe extérieure couvrant l'écran d'affichage, et le revêtement opaque (102) couvrant une zone de l'enveloppe extérieure sauf la zone correspondante à l'écran d'affichage.
